**Europäisches Patentamt**

**European Patent Office**

**Office européen des brevets**

(19)

(11) Veröffentlichungsnummer : **0 344 666 B1**

(12) **EUROPÄISCHE PATENTSCHRIFT**

(45) Veröffentlichungstag der Patentschrift :
27.12.91 Patentblatt 91/52

(51) Int. Cl.⁵ : **B01J 8/38, A23L 1/18, A23P 1/14, B01J 8/14**

(21) Anmeldenummer : **89109600.0**

(22) Anmeldetag : **27.05.89**

(54) **Apparat für den intensiven Gas-Dampf-Feststoff-Kontakt.**

(30) Priorität : **02.06.88 DD 316349**

(43) Veröffentlichungstag der Anmeldung :
**06.12.89 Patentblatt 89/49**

(45) Bekanntmachung des Hinweises auf die
Patenterteilung :
**27.12.91 Patentblatt 91/52**

(84) Benannte Vertragsstaaten :
**AT CH DE ES FR GB IT LI SE**

(56) Entgegenhaltungen :
**CH-A- 468 848**
**DE-A- 3 523 990**
**US-A- 3 323 440**
**US-A- 3 411 430**
**US-A- 3 701 667**
**US-A- 4 165 568**
**US-A- 4 727 798**

(73) Patentinhaber :
**TROCKNUNGS-ANLAGEN-GESELLSCHAFT MBH**
**Am Alten Bahnhof 5**
**W-3300 Braunschweig (DE)**

Patentinhaber : **SKET Schwermaschinenbau Magdeburg GmbH**
**Marienstrasse 20**
**O-3011 Magdeburg (DE)**

(72) Erfinder : **Mörl, Lothar, Prof.Dr.sc.techn.**
**Schillerstrasse 46**
**O-3080 Magdeburg (DE)**
Erfinder : **Künne, Hans-Joachim, Dr.sc.techn.**
**Lion-Feuchtwanger-Strasse 2**
**O-3090 Magdeburg (DE)**
Erfinder : **Krell, Lothar, Dr.-Ing.**
**Otto-Baer-Strasse 53**
**O-3033 Magdeburg (DE)**
Erfinder : **Strümke, Manfred, Prof.Dr.-Ing.**
**Willi-Bredel-Strasse 1**
**O-3090 Magdeburg (DE)**
Erfinder : **Schmidt, Jörg, Dipl.-Ing.**
**Uhlandstrasse 20**
**O-3080 Magdeburg (DE)**
Erfinder : **Schuart, Lothar, Prof.Dr.sc.techn.**
**Schrotebogen 12**
**O-3034 Magdeburg (DE)**

(74) Vertreter : **Döring, Rudolf, Dr.-Ing.**
**Patentanwälte Dr.-Ing. R. Döring Dipl.-Phys.**
**Dr. J. Fricke Jasperallee 1a**
**W-3300 Braunschweig (DE)**

## Beschreibung

Die Erfindung betrifft einen Apparat für den intensiven Gas-Dampf-Feststoff-Kontakt, insbesondere zum Behandeln stärkehaltiger Produkte, bestehend aus einem Reaktionsraum mit vertikaler Achse und einer Gas-Dampf-Aufgabe mit den Elementen Gas-Dampf-Zuführung, Verteilerkammer und Einlaßöffnung, einer Vorrichtung zum Aufgeben des Feststoffes und einer Vorrichtung zum Austrag des Feststoffes.

Intensive Gas-Dampf-Feststoff-Kontakte sind bei einer Vielzahl von Anwendungsfällen erwünscht. Es ist bekannt, diesen Kontakt durch Fluidisierung des Feststoffes zu erreichen. Dabei sind fluidisierte Teilchen bzw. aufgewirbelte Teilchen feinteilige feste Teilchen, die durch die Strömung eines fließenden Mediums angehoben und in Bewegung gehalten werden, entsprechend der Definition im Sinne der Internationalen Patentklassifikation (IPC, 4. Ausgabe 1984, Anmerkung 2 zur Patentklasse B01J).

Dabei strömt durch die Feststoffschicht ein Gas-Dampf-Gemisch, das eine Geschwindigkeit größer als die Lockerungsgeschwindigkeit hat (s. H. Schubert "Aufbereitung fester mineralischer Rohstoffe" Bd. 2 S.62, VEB Deutscher Verlag für Grundstoffindustrie, Leipzig, 1978). Diese Geschwindigkeit charakterisiert den vorliegenden Feststoff nach seinen Stoff- und Formeigenschaften. Beim Überschreiten der Lockerungsgeschwindigkeit expandiert das Feststoffbett. In diesem Zustand ist ein sehr intensiver Kontakt zwischen dem Gas-Dampf-Gemisch und dem Feststoff möglich.

Bei Feststoffen, deren Partikel eine stark von der Kugelform abweichende Gestalt haben, bildet sich dieser fluidisierte Zustand nicht homogen aus. Es kommt wie bei Feststoffen mit größerer Korngröße oder breitem Kornspektrum zur Ausbildung inhomogener Wirbelschichten, bei denen das Gas-Dampf-Gemisch den Feststoff als Pfropfen oder in Blasenform durchströmt oder Gassen bildet.

Ein Apparat zur Erzielung eines intensiven Gas-Dampf-Feststoff-Kontaktes bei einem Feststoff mit höherer Korngröße wird in der Patentschrift US 4 165 568 beschrieben. Dieser Apparat dient dem Expandieren von Mais und besteht aus einem kanalförmigen Reaktionsraum, der einem Querschnitt S hat, welcher am Boden durch mindestens ein Hindernis auf den Querschnitt S vermindert wird. Die Oberfläche des Hindernisses weist zur Horizontalen einen Winkel auf, der größer als der Schüttwinkel des Feststoffes ist. Die freie Fläche des Bodens steht zum Querschnitt des Reaktionsraumes im Verhältnis : $0,60 > s/S > 0,12$. Die Fluidgeschwindigkeit im Querschnitt S ist größer als die Lockerungsgeschwindigkeit und kleiner als die Schwebegeschwindigkeit (s. H. Schubert "Aufbereitung fester mineralischer Rohstoffe" Bd. 1, S.242, VEB Deutscher Verlag für Grundstoffindustrie, Leipzig, 1975) des nicht expandierten Mais.

Dadurch hat das Gas-Dampf-Gemisch im Bodenbereich des Apparates eine hohe Geschwindigkeit, die zum Transport der Maiskörner in den oberen Apparateteil führt. In diesem Teil des Apparates sinkt mit der Erweiterung des Querschnittes die Gas-Dampf-Geschwindigkeit unter die Schwebegeschwindigkeit der nicht expandierten Maiskörner. Diese fallen in das Gutbett zurück. Bei Feststoffen, deren Kornform von der Kugelform abweicht, werden die charakteristischen Geschwindigkeiten auf den Durchmesser einer flächengleichen Kugel bezogen.

Dieser Apparat ist für einen Feststoff aus annähernd sphärischen Partikeln mit einer engen Korngrößenverteilung einsetzbar. Bei Feststoffen, deren Partikel wesentlich von der Kugelform abweichen, ist dieser Apparat nicht anwendbar, weil sich derartige Feststoffe in dem in der oben angeführten Patentschrift beschriebenen Apparat nicht in einen homogenen Fluidisationszustand versetzen lassen und deshalb ein gleichmäßiger Kontakt zwischen dem Feststoff und dem Gas-Dampf-Gemisch nicht möglich ist.

Aufgabe der Erfindung ist es daher, einen Apparat für den intensiven Gas-Dampf-Feststoff-Kontakt vorzuschlagen, dessen Anwendungsgebiet sich auf Feststoffe mit beliebiger Kornform erstreckt.

Diese Aufgabe wird bei einem gattungsgemäßen Apparat dadurch gelöst, daß der Reaktionsraum eine innere Wandung besitzt, welche einen Winkel zur Horizontalen aufweist, der größer als der Wandreibungswinkel des Feststoffes ist, daß sich die Einlaßöffnung der Gas-Dampf-Aufgabe am Boden des Reaktionsraumes in der Wandung befindet, wobei die Einlaßöffnung etwa vertikal am Boden des Reaktionsraumes angeordnet ist, daß der Apparat an der Oberkante dieser Einlaßöffnung zwischen 10 mm und 150 mm breit ist und das Verhältnis zwischen Apparatebreite und Apparatelänge in dieser Ebene 1 : 8 bis 1 : 50 beträgt, däß der Übergang vom Boden des Reaktionsraumes zu der der Einlaßöffnung gegenüberliegenden Wandung stetig ausgebildet ist, daß die Zuführung des Feststoffes oberhalb der Gas-Dampf-Aufgabe angeordnet ist, daß an der Oberseite des Reaktionsraumes ein Gas-Dampf-Abzug angeordnet ist, und daß der Austrag des Feststoffes als Klappe ausgebildet am Boden des Apparates angeordnet ist.

Dieser Apparat schafft den intensiven Gas-Dampf-Feststoff-Kontakt durch eine unabhängig von der Kornform gleichmäßige Fluidisierung aller Partikel des Feststoffes.

Er ist damit auch dort anwendbar, wo die Form der Feststoffpartikel sehr von der Kugelform abweicht. Der erfindungsgemäße Apparat kann insbesondere in der Lebensmittelindustrie zum Expandieren stärkehaltiger Produkte eingesetzt werden.

Diese haben in vielen Fällen eine stark von der Kugelform abweichende Gestalt, beispielsweise sind Kartoffelchips scheibenförmig oder auch in beliebiger anderer Gestalt ausgebildet. Neben Kartoffelchips können auch Mais und andere stärkehaltige Produkte mit dem erfindungsgemäßen Apparat expandiert werden.

Neben der Expansion dieser Produkte kann auch ein Aufbringen von Würz- und Aromastoffen auf die Produkte in dem Apparat vorteilhaft erfolgen, wiederum gerade, wenn diese Produkte sehr unregelmäßig geformt sind.

Es ist unter Umständen vorteilhaft, in der Einlaßöffnung für Gas-Dampf eine oder mehrere Vorrichtungen zur Aufgabe flüssiger oder fließfähiger Stoffe anzuordnen. Dadurch kann ein zusätzlicher Reaktionspartner in den Reaktionsraum aufgegeben werden, was z.B. Bedeutung hat, wenn die Oberfläche des Feststoffes in einer definierten Weise verändert werden soll.

Im folgenden soll die Funktion erläutert werden. Nach der Aufgabe des Feststoffes wird dieser durch die Schwerkraft zum Boden des Apparates bewegt. Dort erfaßt der am Boden des Reaktionsraumes etwa horizontal mit hoher Geschwindigkeit eingeblasene Gas-Dampf-Strom den Feststoff. Durch die hohe Geschwindigkeit des Gas-Dampf-Gemisches erfolgt sofort und unabhängig von der Form der Partikel ein sehr intensiver Kontakt zwischen dem Gas-Dampf-Gemisch und dem Feststoff.

Der Strahl aus Gas-Dampf-Gemisch und Feststoff wird an der der Einlaßöffnung gegenüberliegenden Wandung nach oben umgelenkt. Der aufwärtsgerichtete Strahl wird sich verbreitern und dabei seine Geschwindigkeit auf einen Wert unterhalb der Schwebegeschwindigkeit und oberhalb der Lockerungsgeschwindigkeit der Feststoffpartikel vermindern. Der Gas-Dampf-Strom ist dann nicht mehr in der Lage, die Feststoffpartikel gegen die Schwerkraft zu transportieren, die deshalb wieder zum Apparateboden zurückfallen. Weil an der der Einlaßöffnung gegenüberliegenden Wandung ein starker Strom aus einem Gemisch aus Gas, Dampf und Feststoff nach oben gerichtet fließt, wird der Feststoff an der anderen Seite der Wandung nach unten fallen. Dadurch wird eine zirkulierende Bewegung des Feststoffes innerhalb des Apparates erzeugt. Jedes Partikel des Feststoffes wird also häufig der Zone mit dem intensiven Kontakt zwischen dem Gas-Dampf-Gemisch und dem Feststoff unmittelbar vor der Einlaßöffnung des Gas-Dampf-Gemisches zugeführt.

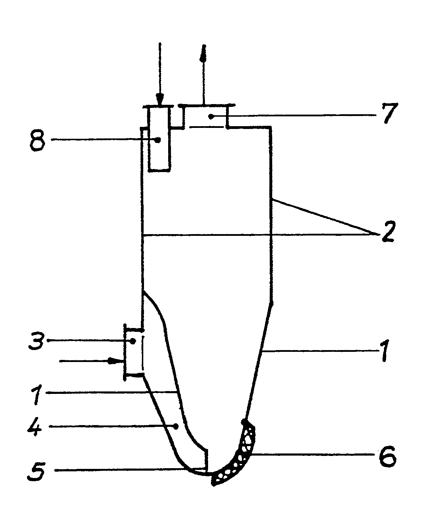

Im folgenden wird anhand der Zeichnung ein Ausführungsbeispiel der Erfindung im einzelnen dargestellt.

Die Figur zeigt den prinzipiellen Aufbau des erfindungsgemäßen Apparates.

Der erfindungsgemäße Apparat für den intensiven Gas-Dampf-Feststoff-Kontakt besteht im wesentlichen aus einem Kanalförmigen Reaktionsraum, der in seinem unteren Teil Wände 1 hat, die um etwa 80° gegen die Horizontale geneigt sind, während der obere Teil vertikale Wände 2 hat.

Der untere Teil des Reaktionsraumes besteht außerdem aus einem runden Boden und einer Gas-Dampf-Aufgabe aus Gas-Dampf-Zuführung 3, Gas-Dampf-Verteilung 4 und etwa vertikaler Einlaßöffnung 5. Die Einlaßöffnung 5 gewährleistet das tangentiale Einblasen des Gas-Dampf-Gemisches an der tiefsten Stelle des Apparates mit einer hohen Geschwindigkeit. Der Apparat hat an der Oberkante der Einlaßöffnung eine Breite von 40 mm. An dieser Stelle verhalten sich die Breite des Apparates und seine Länge zueinander wie 1 : 25. Der der Einlaßöffnung 5 gegenüberliegende Teil des runden Bodens ist als Klappe 6 zum diskontinuierlichen Austrag des Gutes ausgebildet. Der obere Teil des Reaktionsraumes schließt mit einer Abdeckung ab, in der ein Gas-Dampf-Abzug 7 und oberhalb der Gas-Dampf-Aufgabe eine Gutzuführung 8 angeordnet sind. Die Breite des Apparates verhält sich zur Breite der Einlaßöffnung 6 etwa wie 10 : 1.

## Patentansprüche

1. Apparat für den intensiven Gas-Dampf-Feststoff-Kontakt, insbesondere zum Behandeln stärkehaltiger Produkte, bestehend aus einem Reaktionsraum mit vertikaler Achse und einer Gas-Dampf-Aufgabe mit den Elementen Gas-Dampf-Zuführung, Verteilerkammer und Einlaßöffnung, einer Vorrichtung zum Aufgeben des Feststoffes und einer Vorrichtung zum Austrag des Feststoffes, **gekennzeichnet dadurch,** daß der Reaktionsraum eine innere Wandung besitzt, welche einen Winkel zur Horizontalen aufweist, der größer als der Wandreibungswinkel des Feststoffes ist, daß sich die Einlaßöffnung (5) der Gas-Dampf-Aufgabe am Boden des Reaktionsraumes in der Wandung befindet, wobei die Einlaßöffnung (5) etwa vertikal am Boden des Reaktionsraumes angeordnet ist, daß der Apparat an der Oberkante dieser Einlaßöffnung (5) zwischen 10 mm und 150 mm breit ist und das Verhältnis zwischen Apparatebreite und Apparatelänge in dieser Ebene 1 : 8 bis 1 : 50 beträgt, daß der Übergang vom Boden des Reaktionsraumes zu der der Einlaßöffnung (5) gegenüberliegenden Wandung stetig ausgebildet ist, daß die Zuführung (8) des Feststoffes oberhalb der Gas-Dampf-Aufgabe angeordnet ist, daß an der Oberseite des Reaktionsraumes ein Gas-Dampf-Abzug (7) angeordnet ist, und daß der Austrag des Feststoffes als Klappe (6) ausgebildet am Boden des Apparates angeordnet ist.

2. Apparat für den intensiven Gas-Dampf-Feststoffkontakt nach Anspruch 1, **gekennzeichnet dadurch,** daß die Breite des Apparates sich zur Höhe der Einlaßöffnung (6) etwa wie 10 : 1 verhält.

## Claims

1. An apparatus for intensive gas-steam-solid contact, in particular for treating starch-containing products, composed of a reaction chamber having a vertical axis and a gas-steam feed with the elements: gas-steam inlet, distribution chamber and inlet opening, of a device for feeding the solid and of a device for discharging the solid, characterized in that the reaction chamber has an inner wall which is at an angle to the horizontal which is larger than the angle of wall friction of the solid, in that the inlet opening (5) of the gas-steam feed is located in the wall, at the base of the reaction chamber, the inlet opening (5) being arranged approximately vertically and at the base of the reaction chamber, in that the apparatus is between 10 mm and 150 mm wide at the upper edge of this inlet opening (5) and the ratio of apparatus width to apparatus length in this plane is 1 : 8 to 1 : 50, in that the transition from the base of the reaction chamber to the wall opposite the inlet opening (5) is designed to be steady, in that the inlet (8) for the solid is arranged above the gas-steam feed, in that a gas-steam outlet (7) is arranged at the upper side of the reaction chamber, and in that the discharge for the solid is constructed as a flap (6) and is arranged at the base of the apparatus.

2. An apparatus for intensive gas-steam-solid contact in accordance with Claim 1, characterized in that the ratio of the width of the apparatus to the height of the inlet opening (6) is approximately 10 : 1.

## Revendications

1. Appareil pour le contact intensif gaz-vapeur-produit solide, en particulier pour traiter des produits contenant de l'amidon, composé d'une enceinte de réaction à axe vertical et d'une alimentation gaz-vapeur, appareil doté d'une amenée gaz-vapeur, d'une chambre de répartition et d'une ouverture d'admission, d'un dispositif pour amener le produit solide et un dispositif d'évacuation de cette dernière, caractérisé en ce que l'enceinte de réaction comporte une paroi intérieure qui fait avec l'horizontale un angle supérieur à l'angle de frottement sur la paroi du produit solide, l'ouverture d'admission (5) de l'amenée de gaz et de vapeur se trouvant au fond de l'enceinte de réaction et dans la paroi, l'ouverture d'admission (5) étant disposée à peu près verticalement sur le fond de l'enceinte de réaction, l'appareil ayant, sur le bord supérieur de cette ouverture d'admission (5) une largeur comprise entre 10 mm et 150 mm et le rapport entre largeur et longueur de l'appareil étant dans ce plan d'à peu près 1 : 8 à 1 : 50, la transition depuis le fond de l'enceinte de réaction et la paroi opposée à l'ouverture d'admission (5) étant continue, l'amenée (8) de produit solide étant disposée au-dessus de l'amenée gaz-vapeur, une extraction gaz-vapeur (7) étant disposée en face supérieure de l'enceinte de réaction, et l'évacuation du produit solide étant réalisée sous forme de clapet (6), disposé au fond de l'appareil.

2. Appareil pour le contact intensif gaz-vapeur-produit solide selon la revendication 1, caractérisé par le fait que le rapport entre la largeur de l'appareil et la hauteur de l'ouverture d'admission (6) est d'à peu près 10 : 1.